(19) Europäisches Patentamt
European Patent Office
Office européen des brevets

(11) EP 0 527 551 B1

(12) **EUROPEAN PATENT SPECIFICATION**

(45) Date of publication and mention
of the grant of the patent:
**26.08.1998 Bulletin 1998/35**

(51) Int Cl.$^6$: **G02F 1/17**, G11B 7/00,
G11B 7/24, G11C 13/04

(21) Application number: **92305029.8**

(22) Date of filing: **02.06.1992**

(54) **Methods of varying optical properties, optical devices, information recording media and information recording methods and apparatus**

Verfahren zur Änderung optischer Eigenschaften, optische Geräte, Informationsaufzeichnungsmedien und Informationsaufzeichnungsverfahren und Gerät

Méthodes de changement des propriétés optiques, appareils optiques, milieux d'enregistrement de données et méthodes et appareil d'enregistrement

(84) Designated Contracting States:
**DE FR GB**

(30) Priority: **22.06.1991 JP 148399/91**
**04.10.1991 JP 257456/91**

(43) Date of publication of application:
**17.02.1993 Bulletin 1993/07**

(73) Proprietor: **HITACHI, LTD.**
**Chiyoda-ku, Tokyo 100 (JP)**

(72) Inventors:
• **Maeda, Yoshihito**
  **Mito-shi, Ibaraki 310 (JP)**
• **Ikuta, Isao**
  **Iwaki-shi, Fukushima 973 (JP)**
• **Nagai, Masaichi**
  **Hitachi-shi, Ibaraki 316 (JP)**
• **Kato, Yoshimi**
  **Takahagi-shi, Ibaraki 318 (JP)**
• **Andoh, Hisashi**
  **Hitachi-shi, Ibaraki 315 (JP)**

• **Tsukamoto, Nobuo**
  **Ibaraki 312 (JP)**

(74) Representative: **Paget, Hugh Charles Edward et al**
**MEWBURN ELLIS**
**York House**
**23 Kingsway**
**London WC2B 6HP (GB)**

(56) References cited:
**EP-A- 0 173 523        EP-A- 0 425 278**
**FR-A- 2 507 805**

• **SOLID STATE COMMUNICATIONS vol. 56, no. 11, 1985, pages 921 - 924 A. I EKIMOV, AL. L. EFROS, A. A. ONUSHCHENKO 'Quantum Size Effect in Semiconductor Microcrystals'**
• **PATENT ABSTRACTS OF JAPAN vol. 14, no. 136 (P-1021)14 March 1990 & JP-A-2 001 830 (NIPPON TELEGRAPH AND TELEPHONE) 8 January 1990**
• **PATENT ABSTRACTS OF JAPAN vol. 15, no. 224 (P-1212) 7 June 1991 & JP-A-3 065 930 (CANON) 20 March 1991**

## Description

This invention relates to a method of varying or selecting optical properties of a body, and to various applications of the method, such as control of optical devices, information recording media and methods and apparatus for recording, erasing and reproducing information.

One technique for providing a high density of optical recording is the method of "photochemical hole burning" (hereinafter referred to as PHB) as described in United States patent No. 4101976, in which wavelength multiplexing recording is performed using the optical transition levels of the electron systems of organic pigment compounds and changes in the absorption band.

The materials normally used in PHB are quinizarin, pthalocyanine, porphyrin, etc., as the guest materials which are distributed in a transparent host material in the medium structure. These materials have to be cooled to the temperature of liquid helium in order to function as a PHB optical recording medium. In addition, when using PHB for optical recording there is a bleaching effect on the pigment itself by the light that is used for reading the absorbing holes which reduces the number of times the information can be read out.

Research of the physics of glasses with semiconductor fine particles has been described in "Solid State Communication", Volume 56, p. 921 (1985).

The optical non-linear response of semiconductor fine particles has been described in "Oyo Butsuri" (Japanese), Volume 55, No. 3, pp. 325 - 335 (1990).

Neither of these two articles describes the effect of phase changes in such semiconductor fine particles.

US-A-4425570 discloses a recording medium having a light absorptive layer containing small domains of a light absorbing material, which is reversible between two states. Specifically various metal and semiconductor materials are mentioned, for these domains. Light is applied to this recording medium, in order to cause a reversible switch between the two states, in order to record information. Variations in the transmissivity or reflectivity are detected optically, to produce electrical signals representative of the recorded information. EP-A-173253 has a similar disclosure and mentions the use of germanium for the small domains, which is switched between a crystalline and an amorphous state.

An object of the present invention is to provide a recording medium that has high recording density that can permit recording and reproduction preferably at room temperatures, together with associated methods and apparatus.

More generally, it is an object of the invention to provide novel methods and devices for varying optical properties of a body.

In its broadest aspect, the present invention provides a method of varying the optical properties of a material, as set out in claim 1. Due to the quantum size effects, which are explained more below, the optical properties, in particular the optical absorption spectrum is dependent on the size of the crystalline regions of the particles, and also the size distribution. The invention makes use of the size distribution to be found in such a population of particles.

Thus the invention can also provide a method of providing control of an optical device, e.g. for the purpose of information storage, as set out in claim 2.

Further the invention provides a method of data storage as set out in claim 3.

In this method, the initial or erased state may be one in which the crystalline partial regions are absent.

The invention also provides a method of data storage, as set out in claim 7.

The invention is not limited to information recording. Broadly it provides an optical device as set out in claim 8.

In this optical device of the present invention the material whose optical properties one variable may be a recording layer on a substrate. Here, it is sufficient if the substrate can hold the material formed on it, and the presence or absence of transmittivity to the light used can be selected appropriately depending on the mode of use. For example the substrate may be reflecting.

The matrix of the material whose optical properties are variable is typically dielectric and transmissive of light used to effect recording, erasing and reproduction of information. The matrix may be for example glassy or crystalline.

The size distribution of the particles should preferably be one in which it is possible to determine the statistical average value and can be, for example, Gaussian distribution, Lorentz distribution, or any other suitable distribution. Fine structure of the optical absorption spectrum of the particles arises from deviations from e. g. a Gaussian distribution. Uniform dispersion of the particles in the matrix is highly desirable.

The thickness of the matrix layer is not thought to be critical. Suitably it may be less than 10 μm. The thickness may be determined by requirements of the manufacturing process.

The film thickness of the recording layer may suitably be optimized so that the optical interference occurring in the medium can be utilized relative to the light used for recording, reproducing, and erasing the information, and an optimal optical interference range is present depending on the device or application for which the apparatus is used and hence can be selected appropriately.

In addition, where the optical device of the present invention comprises a recording layer on a substrate, this recording layer may have the characteristics that it is made of a preferably non-crystalline matrix (base material) which has dispersed inside it fine particles. The matrix material may be a substance that has a wider band gap than the semiconductor material of the particles, i.e. a lower electron affinity energy than the particles. The size of the particles should preferably be such that their radius is less than three times or less than two times the effective Bohr radius, and the particles having such radii should preferably be more than 80%, even more preferably, more than 90% of the total number of particles. However, even this relationship can be optimized depending on the different uses of the devices. Further, the sizes of the particles should preferably be more than the typical size of the nuclei for microcrystal formation.

Preferably, the fine semiconductor particles have an average size of not more than 10 nm. The particles preferably have a size distribution ($\sigma$) expressed in nm such that $0.5 \leq \sigma \leq 3$, more preferably $1 \leq \sigma \leq 2$. Suitably the particles of semiconductor material are capable of conversion by light energy between an amorphous state and the state of containing crystalline partial regions.

The semiconductor fine particles are preferably made of germanium, silicon, tellurium or selenium and the matrix may be a non-crystalline dielectric material, preferably of silicon dioxide or germanium oxide. Other materials which may be used are discussed below. The matrix is preferably formed of a material having a solid solubility for said semiconductor material of at most 5 atomic %.

The volume of the particles in said matrix is preferably in the range 10 to 60% of the total volume of the matrix.

The energy used in the invention to change the state of the fine particles, can be, for example, light (including IR radiation), electrical energy, magnetic energy, pressure, etc. Preferably, a dye laser is used and may have an energy density sufficient to cause phase change of the semiconductor particles. Higher energy lasers such as a Nd/YAG (yttria alumina garnet) laser or a $N_2$-gas laser-may be employed. In use of a laser, for example, the energy (joules) is determined by the product of the power (watts) and the time duration (seconds), and it is preferable that the recording energy is larger than the reproduction energy and that the erasing energy is larger than the recording energy.

One method of recording information in the material used in the invention comprises the steps of (a) applying a first energy to said material so as to bring the fine semiconductor particles into the non-crystalline state and (b) forming regions of the crystalline state exhibiting quantum size effects inside the particles by at least one application of a second energy which is smaller than the first energy, the application of the second energy being controlled in dependence on the information to be recorded.

Another method of recording information in the material used in the invention comprises the step of applying, at least once to the material, energy greater than the optical fundamental absorption energy of the fine semiconductor particles, application of the energy being controlled in dependence on the information to be stored.

The invention also provides a method of erasing information recorded in the material used in the invention, comprising applying energy to convert the fine semiconductor particles into a non-crystalline state thereby erasing said recorded information.

The invention also provides a method of reproducing information recorded in the material used in the invention, which has information recorded in it, comprising detecting at least one absorption wavelength appearing in a spectrum selected from the reflection, transmission and absorption spectra of said recording layer.

One method of recording and reproducing information to which the present invention may be applied uses the photon echo effect. In this, recording is effected by applying at least one laser pulse to bring the fine semiconductor particles to a non-crystalline state by melting thereby initializing the recording medium, and thereafter applying at least one laser pulse to bring core portions of the particles to a crystalline state thereby forming crystalline regions exhibiting quantum size effects with a distribution of radii, thereby recording the information by varying the third order polarization of the particles which is dependent on the radii of the said crystalline regions, and the reproducing is effected by applying first, second and third excitation pulses to the recording layer at instants of times of $t_1$, $t_2$ and $t_3$ ($t_1 < t_2 < t_3$) thereby generating effectively simultaneously polarization in the crystalline regions by means of said first to third excitation pulses, and then applying a fourth excitation pulse at an instant of time $t_4$ ($t_4 > t_3$, $t_4 - t_3 = t_2 - t_1$) and reproducing the information by detecting change in the transmissivity of the fourth excitation pulse.

In another aspect, the invention provides information recording apparatus as set out in claim 23.

This apparatus may include a Fabry-Perot optical resonator having at least two mirrors that partially transmit light in a wavelength range of light that performs at least one of the operations of recording, reproducing and erasing of information in the optical recording medium, with the recording medium being located between the two mirrors.

The apparatus may include a ring resonator formed by a partially transmitting mirror located so that it receives light from a first partially reflecting mirror and a first fully reflecting mirror, which are placed on opposite sides of said optical recording medium, a second fully reflecting mirror and a third fully reflecting mirror located so that it receives light from the second fully reflecting mirror and directs that light to the the partially transmitting mirror.

The resonator is an interferometer and functions as an optical amplifier. In particular, the ring resonator may include the computation functions.

In addition to the recording of information, the present invention can also be applied to other optical devices such as filters, display devices, optical switches, solid state lasers, optical modulators, pressure sensors, light emitting devices, non-linear optical devices, optical operational devices, etc. The invention can permit active control of the optical properties of such devices.

Embodiments of the invention will now be described by way of non-limitative example with reference to the accompanying drawings, in which:-

Figure 1A shows diagrammatically the construction of an optical recording medium embodying the invention, and Figure 1B shows an enlarged portion A of Figure 1A;
Figure 2A shows a transmittance spectrum of a recording medium of the invention and Figure 2B shows an enlarged portion A of Figure 2A;
Figures 3A, 3B and 3C are diagrams explaining the processes of recording and erasing in an embodiment of the invention;
Figures 4A, 4B, 4C and 4D are diagrams explaining the erased states, Figures 4A and 4C showing the semiconductor particles in the matrix and Figures 4B and 4D the corresponding absorption spectra (the arrows a indicate the effective Bohr radius);
Figures 5A, 5B, 5C and 5D are diagrams explaining the recorded states, Figures 5A and 5C showing the semiconductor particles in the matrix and Figures 5B and 5D the corresponding absorption spectra;
Figure 6 shows the light emission characteristics of an embodiment of the invention;
Figure 7 is a diagrammatic view of an information recording and reproducing apparatus embodying the invention;
Figure 8 is a diagrammatic view of another information recording and reproducing apparatus embodying the invention; and
Figure 9 is a diagrammatic view of a third information recording and reproducing apparatus embodying the invention.

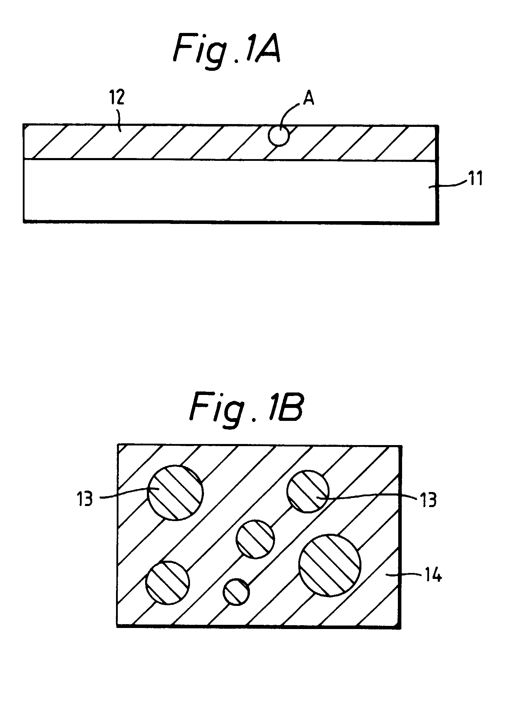

A basic structure of the recording medium in the present invention comprises, as is shown in one embodiment in Figure 1, of semiconductor doped glass 12 formed on the substrate 11 with the said semiconductor doped glass 12 comprising the semiconductor fine ultra-fine particles 13 (here also called "ultra-fine") embedded within a dielectric material or glass (in the glassy state) 14 that has a larger band gap than the band gap of the ultra-fine particles.

The radius of semiconductor crystal regions at which the quantum size effects appear is less than the effective Bohr radius a of the excitons formed within the ultra-fine particles by the irradiation with a laser having an energy greater than the energy Eg of the optical fundamental absorption energy of the semiconductor ultra-fine particles being used.

The Bohr radius a is given by the following equation:

$$a = (h/2\pi e)^2 \in (1/me+1/mh) \quad \text{Equation 1}$$

where, h is Planck's constant of the crystals, e is the electronic charge, $\varepsilon$ is the optical dielectric constant, me is the effective mass of the electrons, and mh is the effective mass of the holes.

The state of the ultra-fine particles used according to the present invention can be observed using a transmission electron microscope, and it is also possible to determine the state of the distribution of the ultra-fine particles within the matrix using the same method.

The present invention was based on the discovery that extremely small germanium ultra-fine crystals emit light at room temperature at wavelengths from yellowish green to red color (visible light at room temperature).

The world of electrons is governed by the rules of quantum mechanics. According to these rules, in the case of crystals of less than about 10 nm (that is, quantum sizes), it is possible to observe different characteristics or new phenomena not found in the normal bulk crystals.

In this context, the inventors of the present invention tried a new approach using the separating phenomenon of ultra-fine crystals for the preparation of three dimensional quantum wells (the state in which electrons are enclosed in a very small region).

In one preparation process, for example, germanium and silicon dioxide are radio frequency sputtered simultaneously in an argon gas environment, thereby creating a state in which non-crystalline silicon dioxide and non-crystalline germanium are in solid solution. When this is heat treated, it is possible to separate out ultra-fine crystals of germanium within the non-crystalline silicon dioxide without defects. It was understood by observation in an ultra-high resolution electron microscope that these were spherical shaped totally crystalline germanium particles of diameters of less than 10 nm embedded in a dielectric material of non-crystalline silicon dioxide. These can be said to be three dimensional quantum wells prepared by the natural phenomenon of separation.

Germanium is a Group IV element like silicon and is an indirect band gap semiconductor that does not emit light optically. However, it was found that the semiconductor ultra-fine crystals without defects embedded within a dielectric material of silicon dioxide strongly emit light at room temperature in the wavelength range of 560 to 600 nm (corresponding to the colors from yellowish green to red) during photoluminescence measurements (light generation due to optical excitation). In addition, it was also observed that the wavelength of the peak of this light emission varies depending on the diameter of the ultra-fine crystals of germanium. From this light emission phenomenon that cannot be conceived according to the conventional knowledge, it was possible to determine that the ultra-fine germanium crystals separated within silicon dioxide can function sufficiently as a three dimensional quantum well.

This phenomenon of light emission by germanium ultra-fine crystals can be thought of as a new phenomenon brought about by the three dimensional quantum effects. In such three dimensional quantum systems, there are the possibilities of finding as yet unknown new phenomena that are different from the conventional bulk crystals, and can be considered to hold the key to quantum devices based on new principles.

In germanium ultra-fine crystals, it is possible to generate light emission of shorter wavelengths than that of silicon, because of the electronic characteristics of germanium (such as the energy of electrons, the effective mass, etc.). In addition, germanium can be said to be a more promising material for quantum devices because of the features of the germanium quantum system such as having higher electron mobility than silicon, etc.

The principles of operation of the present invention are described below step by step.

The quantum size effects of the semiconductor-doped glass 12 of Figure 1 are explained below. When the magnitude of the potential generated by the dielectric or glass 14 is infinite, the electron state of the semiconductor ultra-fine particle 13 that is embedded can be considered to be three dimensional quantum confinement. If we assume that on an average, the ultra-fine particle that is embedded has a spherical shape, the electron level E (1, n) is given by the following equation -

$$E(1, n) = Eg + h^2 / (8\pi^2 \mu R^2)\phi(1, n)^2 \quad \text{Equation 2}$$

Here, Eg is the energy band gap of the bulk crystal, R is the radius of the ultra-fine particle, h is Planck's constant, $\mu$ is the equivalent mass($1/\mu = 1/me + 1/mh$, where me is the effective mass of the electrons and mh is the effective mass of the holes), $\phi(1, n)$ are the eigenvalues of Bessel's functions, and the lowest state eigenvalue $\phi(0, 1)$ is $\pi$.

From this equation, it is evident that the minimum energy shifts towards the high energy side as the radius R of the ultra-fine particle becomes smaller. When a light beam of energy greater than that corresponding to the band gap of the semiconductor is impinged on the semiconductor, the highest energy electrons in the valence electron band get excited thereby generating an exciton that is a pair of the excited electron and the corresponding hole. Such an exciton can move freely within the crystal structure due to the translational symmetry. This is due to the nature of development of the wave function W (k, t) = u(k) exp (-ikR-iωt) and the Bloch function u (k). Such excitons are called Wannier excitons. The generation and extinction of excitons depends on the dipole moment between the electron levels that are transited. The dipole moment Pn of transition is given by the following equation -

$$Pn = 1/\pi(2R/a)^{3/2}/n\mu(c, v), (n=1,2...) \quad \text{Equation 3}$$

Here, $\mu(c, v)$ is the interband transition dipole moment, n is the major quantum number and a is the effective Bohr radius of the exciton. From this equation, it is evident that the change in the dipole moment of the transition n = 1 → 2 from the minimum energy state to the first excited state is large. Further, it is also evident that the intensity of the transition becomes larger as the ratio of the diameter to the effective Bohr radius (2R/a) becomes large. As a result, the process of light absorption is basically determined by the transition from the minimum energy level E (0, 1) obtained by Equation 2 to the first excited states E (0, 2; 1, 2; -1, 2). Since E (0, 1) becomes larger as the radius R of the ultra-fine particle becomes smaller, the optical fundamental absorption energy shifts towards shorter wavelengths. This is called the Blue Shift. From the above theoretical principles, it is clear that if the radius R of the ultra-fine particles is controlled in the range in which the quantum size effects appear, it will be possible to freely shift the optical fundamental absorption energy of the semiconductor ultra-fine particles.

A principle of recording of the present invention comprises the wavelength multiplexing recording of information corresponding to the wavelength dispersion of the optical absorption spectrum. Although the principle of controlling the distribution of the radii of the semiconductor ultra-fine particles within the glass matrix is described later, if we assume that the ultra-fine particle diameter has a Gaussian distribution, the radii occurrence frequency distribution can be expressed by the following equation

$$u(R, \sigma) = 1/\sqrt{2} \pi\sigma exp(-(R-Rav)^2/2\sigma^2) \quad \text{Equation 4}$$

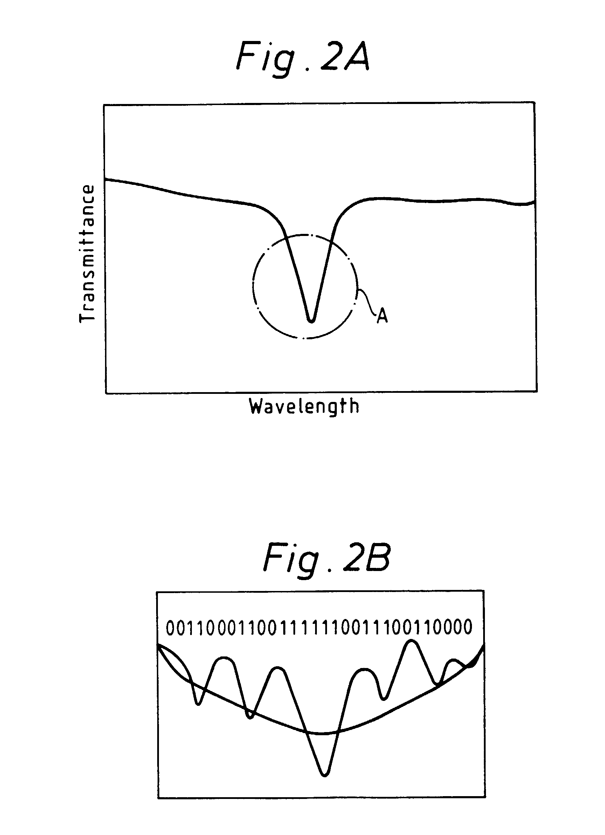

Here, Rav is the average radius and $\sigma$ is the dispersion of the radii. Thus, the radii distribution of the ultra-fine particles is reflected in the absorption spectrum. The absorption of the medium will be a distribution centered around the absorption energy E (0, 1 : Rav) corresponding to the average radius Rav, as shown in Figure 2. Further, if we observe the minute structure of the spectrum by increasing the wavelength resolution, we can see that there are absorptions corresponding to the radii R of the different ultra-fine particles. The wavelength multiplexing recording is carried out for example by making the unit of information of the "1" bit correspond to these minute absorption bands formed in the spectrum as is shown in Figure 2B. The detection of whether "0" or "1" is done using the method of detecting the peak wavelength of the second order differential absorption spectrum or using a detection method dependent upon the modulation method of the digital signal. It will be possible to carry out multiplexing recording over a wide wavelength range by controlling the average radius Rav of the ultra-fine particles and its dispersion.

In practical terms, it is preferable to use a semiconductor that can generate quantum size effects with a large particle radius and thus has small electron and hole effective masses resulting in a large effective Bohr radius. In such a semiconductor, since the amount of the Blue Shift of the absorption energy corresponding to the radius R of the ultra-fine particle will be large as can be seen from Equation 2, there will be the advantage that the range of recording wavelengths will be large.

The control of the radius R of the ultra-fine particles within the semiconductor-doped glass is done using the method of separating the semiconductor atoms that are present within the glass in the form of a supersaturated solid solution by annealing at a temperature at which the diffusion of the doped semiconductor atoms is easy. At this time, the particle radius R(t) is given by the theoretical equation of Lifshits - Slesov given below -

$$R(t)=(4/9\alpha Dt)^{1/3}, D=D_0\exp(-Ea/kT) \qquad \text{Equation 5}$$

Here, $D_0$ is the diffusion coefficient, Ea is the diffusion activation energy of the semiconductor atoms within the glass matrix, k is the Boltzmann constant, and T is the annealing temperature.

The principle of controlling the diameters of the ultra-fine particles in the present invention is described below. Since the medium immediately after the film growth is in the state in which the semiconductor in the glass matrix is in the form of a supersaturated solid solution, the semiconductor ultra-fine particle crystals are separated in the matrix by heat treatment. The control of the particle diameter during this process is done by controlling the annealing temperature and time based on Equation 5 and uses the difference in growth of the ultra-fine particles due to the degree of supersaturation within the glass due to the different values of the annealing temperature and time duration.

The dielectric material should preferably be selected from silicon dioxide, aluminum oxide, silicon nitride, zirconium oxide, aluminum nitride, germanium oxide, yttrium oxide, hafnium oxide, sodium chloride, potassium chloride, polyethylene, polyester, polycarbonate, polymethylmethanol, or other organic resins. In addition, it is also possible to use zeolite or other porous glasses. The semiconductor material should preferably be germanium, silicon, tellurium, selenium. Other semiconductors such as lead sulfide, copper chloride, cadmium sulfide, cadmium selenide, a mixed crystal of cadmium sulfide and cadmium selenide, germanium telluride, tin telluride, indium telluride, or mixed crystals of III-V group elements such as the gallium arsenide system, etc may be used, provided that they can be sufficiently easily converted between crystalline and amorphous states.

The combination of the two materials should preferably be such that the dielectric material does not form a solid solution with the semiconductor material that is embedded in it, or even if it forms a solid solution, it is at less than 5 at%. In addition, it is preferable that the

electron affinity energy $\rho 1$ of the dielectric material is smaller than the electron affinity $\rho 2$ of the semiconductor material. It is preferable that $\rho 1 - \rho 2$ is more than 0.5 eV.

The method of preparation of the recording medium of the present invention can be chosen from film growth techniques for forming the dielectric material, various types of sputtering methods, the CVD (Chemical Vapor Deposition) method, chemical plating, the solgel method, a method of impregnation into the fine pores of zeolite or other porous glasses, vacuum evaporation methods, the methods of spraying suspension liquids of organic resins, the reduction decomposition methods of nitrides or oxides, etc.

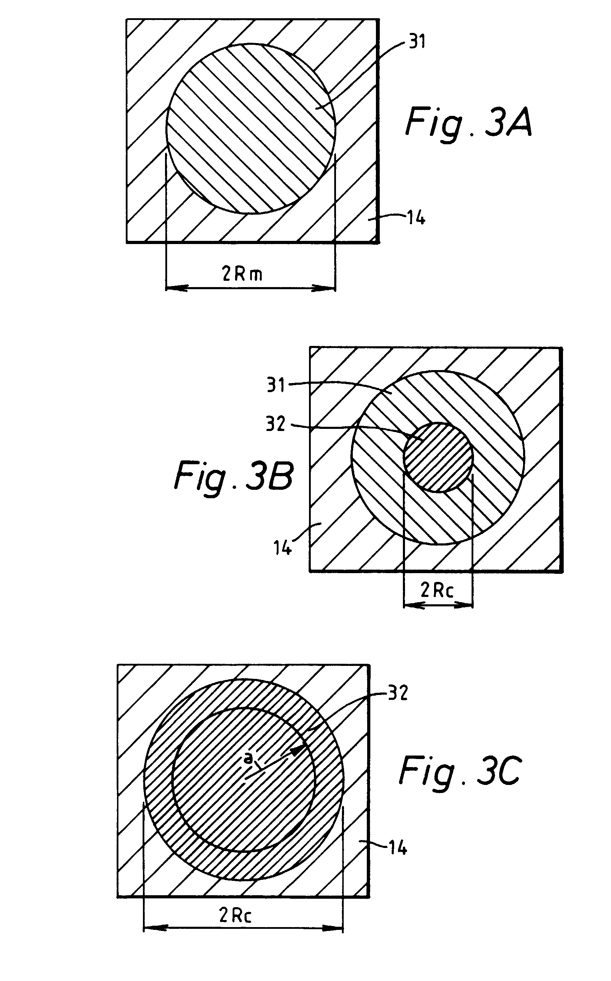

Figures 3A to 3C show the change in the structure in the states of recording and erasing information of one semiconductor ultra-fine particle of radius R. The erased state of the optical recording medium according to the present invention corresponds to the following two structures.

(1) The structure in which the entire interior part of the ultra-fine particle is in the non-crystalline state as is shown in Figure 3A.
(2) The structure in which the radius Rc of the crystalline part inside the ultra-fine particle is greater than the effective Bohr radius a as is shown in Figure 3C.

In (1), when the entire semiconductor ultra-fine particle is irradiated with a high energy laser pulse for about several pico seconds, the entire semiconductor ultra-fine particle will be heated up to several thousand degrees Centigrade so as to melt it and then it is suddenly cooled thereby taking the entire semiconductor ultra-fine particle into the non-crystalline state (see figure 3A). The recording is done by varying the radius Rc of the crystalline part of the ultra-fine particle. This is done by irradiating the non-crystalline ultra-fine particle with a relatively lower energy laser pulse so that the particle becomes crystalline at its center (see Figure 3B). As a result, the ultra-fine particle will consist of a crystalline phase core 32 embedded within a non-crystalline phase 31, and the quantum size effect and the Blue Shift of the absorption energy corresponding to Rc will be the control factor necessary for recording the information.

Here, we postulate the process of crystallization of the non-crystalline ultra-fine particle due to the irradiation by the laser pulse, but the invention does not depend upon the correctness or otherwise of this assumption. Since the ultra-fine particle is considerably smaller than the wavelength of the laser beam, the energy of the laser beam will be absorbed uniformly within the particle and hence the material will be heated up to a uniform temperature, but the cooling process due to heat conduction will be considerably different at the surface and inside. The speed of cooling at the surface is larger than that at the inside. This is because the area of heat radiation is proportional to $R^2$. As a consequence, the central part can be said to be in an appropriate condition for crystallization after melting because it gets cooled slowly. Further, we suppose that since according to the theory of crystal nucleus generation and growth the crystal nucleus with the smaller surface area is more likely to grow, the nucleus will be grown more easily at the central part of the ultra-fine particle rather than at the surface. Due to this mechanism of nucleus generation, it is possible to think that the state of the ultra-fine particle in which a crystalline part with an outer sheath of non-crystalline part will be generated.

In (2) above, since the absorption is shifted to the longer wavelength side of the wavelength region where the absorption is detected by making the radius Rc of the crystalline portion greater than the effective Bohr Radius, it is possible to take the region into the apparently unrecorded state (see Figure 3C).

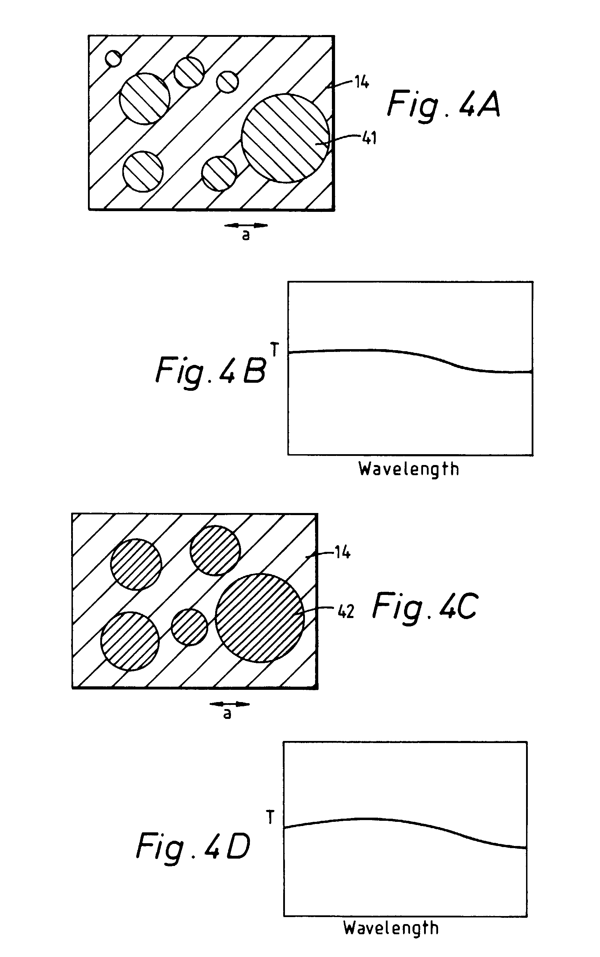

The distribution of the internal structure of the semiconductor ultra-fine particles and the change in the absorption spectrum in the unrecorded state and the erased state are shown in Figures 4A to 4D. In the present invention, the unrecorded state and the erased state consist of non-crystalline semiconductor ultra-fine particles 41 having radii greater than the effective Bohr radius a (as shown in Figure 4A), or of crystalline semiconductor ultra-fine particles 42 having radii greater than the effective Bohr radius a (as shown in Figure 4C). At this time, no absorption peak will be observed in the absorption spectrum of the detected wavelength range. As a result, this corresponds to the unrecorded state or the erased state.

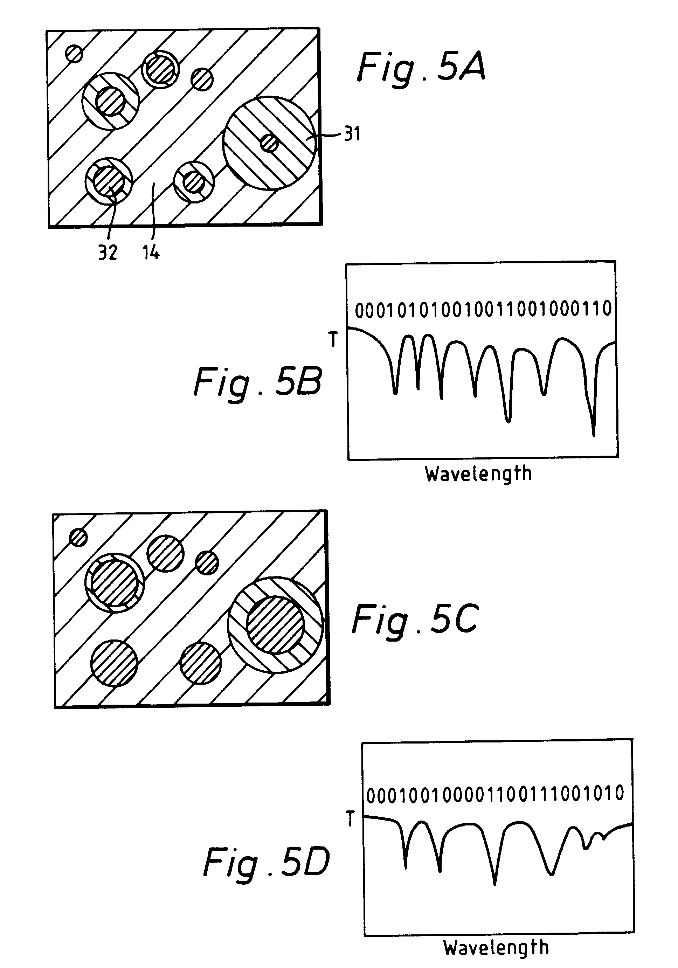

The distribution of the internal structure of the semiconductor ultra-fine particles and the change in the absorption spectrum in the two recorded states are shown in Figures 5A to 5D. The unrecorded state and the erased state consist of semiconductor ultra-fine particles having different radii in the non-crystalline state. According to Equation 2, the recorded state in the present invention will be determined by the radius Rc of the crystalline portion. The radius of the crystalline portion formed in the central part of the semiconductor ultra-fine particle due to the irradiation by optical energy such as a laser pulse, etc., will become smaller in the semiconductor ultra-fine particles with the larger radii. This is because the temperature at the center will be lower in the semiconductor ultra-fine particles with the larger radii. By using this phenomenon, it is possible to control to a high accuracy the distribution of the radii Rc of the crystalline portions. The method of re-writing information in the medium can be either (1) recording after returning the semiconductor ultra-fine particles to the erased state shown in Figure 4A or Figure 4C or (2) irradiating the recording laser pulse again to increase the radius of the crystalline portion. In method (1), there is the advantage that the range of wavelengths that is being detected can always be maintained constant. In method (2), since the diameter of the crystalline portion increases every time the information is re-written and hence the absorption position shifts towards the longer wavelength side, it may be necessary to set beforehand the range of wavelengths detected to be wide. As a result, it will be necessary to sacrifice the resolution of detection of the absorption. However, in method (2), since it will be possible to overwrite new information on old information, there is the advantage that the speed of re-writing information will be higher. It is possible to use the above two methods in combination as a system.

In the PHB method of optical recording discussed above, there was the problem of reliability under practical conditions because the operating temperature is lower than liquid nitrogen temperature. In this context, we study the operating temperature as a memory apparatus of the optical recording medium based on the principle of operation of the present invention. The recording medium of the present invention has the feature that it is physically of the zero order quantum system. As a consequence, it has the features of a zero order quantum system determined by Equation 2. In an ultra-fine particle in which the three dimensions of X, Y, and Z are all of quantum sizes, the energy of the electrons and holes will become dispersive and the state density g(E) will effectively become infinity at each energy level. The actual electron distribution is given by the product of the state density g(E) and the Fermi-Dirac statistics function f(E) which indicates the fluctuations in the distribution of the electron states due to temperature as follows.

$$f(E)=1/(exp((E-Ef)/kT)+1) \qquad \text{Equation 6}$$

Here, Ef is the Fermi energy, k is the Boltzmann constant, and T is the temperature. Therefore, g(E) f(E) will be spread to infinity at each electron energy level En irrespective of the temperature. In actuality, a finite electron energy distribution will be obtained due to the dispersion of the electron waves in the ultra-fine particles and it is evident that the distribution is limited to an extremely narrow energy range. The feature of this zero order quantum system indicates that the recording operation in one of the recording medium in the present invention can operate at room temperature or at high temperatures because it is not affected by the fluctuations in the electron system due to temperature, and hence this is fundamentally different from the PHB which is also a wavelength multiplexing recording medium.

In the invention it is possible to use a method of recording and reproduction based on accumulated photon echo.

Photon echo is one of the third order non-linear optical effects and three optoelectric fields come into play. The macro third order non-linear polarization P will be excited in the medium due to three excitation pulses $E_1$, $E_2$, and $E_3$ irradiated at the instants of time $t_1$, $t_2$, and $t_3$, and the light radiated at the instant of time $t_3+t_2-t_1$ from

this polarization is the photon echo. It is possible to detect the polarization from the change in the transmittivity of probe light passing through the medium at the fourth pulse at the instant of time $t_4$ when the polarization is excited. As a result, the relationship $t_4$-$t_3$ = $t_2$-$t_1$ should be satisfied. Although photon echo is also observed at a low temperature near 4.2K similar to PHB, in the recording medium of the present invention the photon echo method can operate at operating temperatures at or above room temperature. Further, in the present invention, the third order non-linear optical polarization P which is the physical cause of photon echo can be made large. The third order polarization rate $X_3$ is given by the following equation:

$$\chi_3 = (6\pi^2 r/R^3 h^3 (\omega-\omega_1)^3)|Pcv|^4 \quad \text{Equation 7}$$

Here, r is the rate of the occupation area of the ultra-fine particle and $\omega_1$ is the angular frequency of the exciton at the lowest energy level. From this, it is clear that the third order non-linear polarization rate increases in proportion to the -3 power of the diameter R of the ultra-fine particle. In this optical recording medium, as a result, it is possible to generate photon echoes of various modes by the control of the average diameter of the ultra-fine particle described above.

In the present invention therefore, an optical recording medium can be provided in which wavelength multiplexing recording and photon echo memory are possible due to the control of the average diameter of the semiconductor crystalline regions using the non-crystalline to crystalline phase transition within the ultra-fine particles due to the quantum size effect of the ultra-fine particles and irradiation with laser pulse.

## Embodiment 1

A film was grown on a quartz glass substrate using the rf magnetron sputtering method by covering a fixed area of an $SiO_2$ target with a Ge chip. Instead of quartz, silicon may be used as a substrate. The sputtering output was 1200W and the Ar gas pressure was 20 mTorr. The sample so prepared was heat treated for 30 minutes at more than 800°C in vacuum and the supersaturated solid solution of Ge within $SiO_2$ is separated thereby preparing an optical recording medium having the structure shown in Figures 1A and 1B. The growth of ultra-fine particles of Ge of less than 7 nm average particle diameter within the $SiO_2$ matrix due to heat treatment was confirmed by laser Raman spectroscopy.

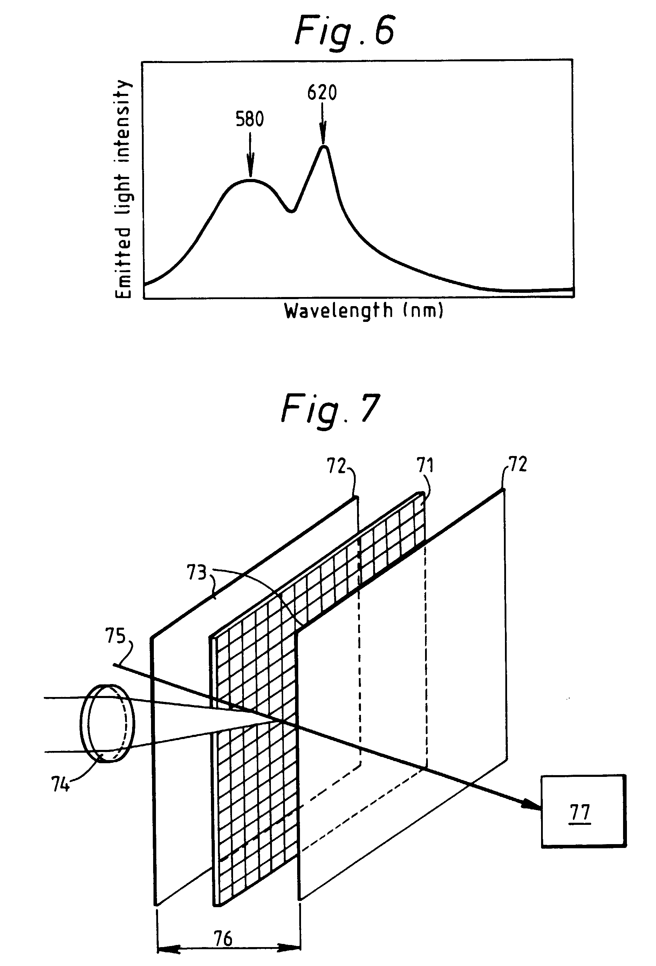

The intensity of light emitted by photoluminescence when excited by an argon ion laser of 514.5 nm wavelength is shown in Figure 6. The light emitted shows a sharp peak near a wavelength of 620 nm and a broad peak centered around 580 nm. This is the light emission due to the electron transitions between the quantum levels formed by the quantum size effect of the ultra-fine particles of Ge. The change in the absorption spectrum was observed by irradiating the recording medium with laser pulses of 1 ps duration with different energy densities E. No absorption was observed when E was greater than 100kW/cm$^2$. This is because the Ge ultra-fine particles became non-crystalline due to melting. When E was about 20 kW/cm$^2$, it was observed that the absorption wavelength shifted towards the shorter wavelengths as the number of repetitions of irradiation was increased. This indicates that the absorption wavelength is dependent upon the diameter of the crystal regions of the Ge ultra-fine particles. By this embodiment of the present invention, the validity in principle of the methods of recording, reproducing, and erasing of information according to the present invention was confirmed.

With the present invention, unlike in the conventional techniques of increasing the density of optical recording by making small the recording marks themselves that are formed with sizes of several microns on the optical recording medium as the basic unit of information so as to increase the recording mark density per unit area, there is no need to reduce the wavelength of the laser used for recording nor is it necessary to increase the aperture of the objective lens that is used for focusing the laser light. Further, since it is possible to carry out wavelength multiplexing recording within the present invention, it is in principle possible to achieve recording densities of $6 \times 10^{10}$ bits per cm$^2$ of unit area of the recording medium. This means that the present invention permits high density recording of more than 600 times the recording densities of $10^8$ bits/cm$^2$ currently possible in optical disks.

In addition, in contrast with the PHB optical recording method in which the temperature range of use is restricted to 0.3 to 25K, the present invention can be used at or above room temperature.

In addition, the stability of the reproduced light is very good in the present invention because there is an energy threshold value for the formation of the absorption holes.

## Embodiment 2

A film was grown on a quartz glass substrate using the rf magnetron sputtering method by covering a fixed area of an $Al_2O_3$ target with a Si chip. The sputtering output was 1200W and the Ar gas pressure was 20 mTorr. The sample so prepared was heated in portions by irradiating with a laser beam thereby separating the Si that was in the form of a supersaturated solid solution within $Al_2O_3$. By adjusting the power and pulse width of the laser, it was possible to control the distribution of the radii of the ultra-fine particles of Si that were grown. It was confirmed by this method that it is possible to grow ultra-fine particles of Si with radii distribution inside $Al_2O_3$ in the form of a matrix of unit size of several microns to several tens of microns. It was also confirmed that the optical recording medium prepared in this embodiment also had the effects similar to that in Embodiment 1.

Embodiment 3

One of the preferred embodiments of an information recording and reproduction apparatus according to the present invention is shown in Figure 7. The optical recording medium 71, which is as described above, has an arrangement of elements of dimensions of five microns square in the form of a matrix, with the two faces being provided with two partially transparent mirrors 72 or dielectric films having appropriate reflectivity thereby forming a Fabry-Perot resonator 73. After changing the absorption spectrum of the elements by selective irradiation with pulses of laser light as described above, the absorption peaks were detected with a high sensitivity by the detector 77 by changing the mirror spacing 76 of the Fabry-Perot resonator so that the transmittivity becomes maximum when resonated at the absorption wavelength by irradiating with a dye laser 75. In this apparatus, wavelength multiplexing recording in the optical recording medium of the present invention is possible.

Embodiment 4

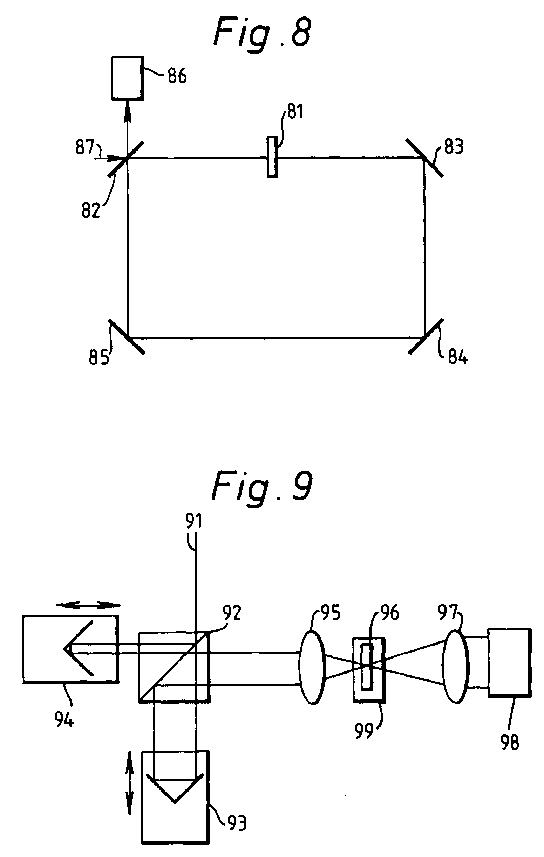

Another preferred embodiment of an information recording and reproduction apparatus according to the present invention is shown in Figure 8. The optical recording medium 81 is the same as that in Embodiment 3. This apparatus comprises a ring resonator formed by a partially transmitting mirror 82 and a fully reflecting mirror 83, which are placed on opposite sides of the optical recording medium 81, and another fully reflecting mirror 84 which is placed opposite the fully reflecting mirror 83, and yet another fully reflecting mirror 85 which is placed opposite the fully reflecting mirror 84. After the absorption spectrum of the elements is changed by irradiating each of the elements of the optical recording medium 81 with a specific number of pulses of the laser beam 87 via the partially transmitting mirror 82, the dye laser 87 is irradiated again to resonate the elements at the absorption wavelength and the spacing of the ring resonator mirrors is changed to maximize the transmittivity thereby detecting the absorption peak with a high sensitivity by the detector 86. When the detection wavelength range was 400 to 600 nm, and the detector was a high speed Fourier transformation equipment, a 0.2 nm resolution of each absorption wavelength is achievable thus yielding a wavelength multiplexing level of 500 to 1000.

Embodiment 5

Another preferred embodiment of the information reproduction apparatus based on accumulated photon echo according to the present invention is shown in Figure 9. The recording medium 96 is as in Embodiments 3 and 4. The laser pulse 91 is divided into a pump light beam and a probe light beam by the polarization beam splitter 92. These two light beams are modulated in time respectively by the optical delay circuits 93 and 94 and are impinged on the optical recording medium 96 by the focusing optical system 95. The pump light beam and the probe light beam that pass through the optical recording medium are guided to the detector 98 by the collimator lens 97. The time difference (the phase difference) between the pump light beam and the probe light beam are detected in the detector 98 thereby detecting the occurrence of photon echo in the optical recording medium 96 on a time scale. The optical recording medium 96 has the form of a matrix as shown in Figure 7 and the scanning of the laser pulse 91 for the elements of the matrix is done by the movement device 99.

To summarize, the invention can provide optical recording media, methods of recording, reproducing, and erasing information, and information recording and reproduction apparatus by which it is possible to operate extremely high density information recording, reproduction, and erasing at or above room temperature. The invention can be applied to other optical systems inventing control or variation of optical properties.

**Claims**

1. A method of varying the optical properties of a material having fine semiconductor particles (13) distributed in a dielectric matrix (14), said particles (13) being capable of comprising crystalline and amorphous partial regions, the method being characterized by the step of applying to said material electromagnetic energy so as to change the size of said crystalline partial regions (32) of said particles, which crystalline partial regions are of a size exhibiting quantum size effects, thereby changing the optical absorption spectrum of the material

2. A method according to claim 1 for providing control of an optical device comprising said material, wherein said control is performed by applying said energy to said material so as to vary the ratio of the relative amounts of amorphous regions (31) and crystalline regions (32) in said particles.

3. A method according to claim 1 or claim 2, wherein data storage is performed by varying the optical properties of said material in dependence on the data being stored, wherein said energy is light energy which changes the amount of said crystalline partial regions (32) in said semiconductor particles.

4. A method according to any one of claims 1 to 3, wherein the size distribution of said semiconductor particles (13) has a dispersion σ expressed in nm such that 0.5≤σ≤3.

5. A method according to any one of claims 1 to 4, wherein said semiconductor particles (13) have an average particle size of not more than 10 nm.

6. A method according to any one of claims 1 to 5, wherein at least 80% of said semiconductor particles (13) have radii which are less than the effective Bohr radius of the material of said semiconductor particles.

7. A method of data storage comprising the step of applying electromagnetic energy representative of the data to be stored to a recording material which has fine semiconductor particles embedded in a dielectric matrix, said particles being capable of comprising crystalline and amorphous partial regions,' which crystalline regions are of a size exhibiting quantum size effects, whereby said particles have an optical fundamental absorption energy which is controllable by said applied electromagnetic energy, the application of said applied electromagnetic energy being chosen to have the effect of selecting optical absorption frequency spectra of the recording material in dependence on the data to be stored.

8. Optical device having a material whose optical properties are variable, said material having fine particles (13) of semiconductor material distributed in a dielectric matrix (14), said particles being in a state of containing within them crystalline partial regions (32) of said semiconductor material, said crystalline regions (32) being of a size exhibiting quantum size effects, said device further having means for applying electromagnetic energy to said particles (13), so as to vary the size of said crystalline partial regions (32).

9. Optical device according to claim 8, wherein said means for applying energy to said particles are adapted to apply energy of intensity sufficient to vary the ratio of the relative amounts of amorphous (31) and crystalline regions (32) of said particles, thereby controlling the optical properties of the body.

10. Optical device according to claim 8 or 9 wherein said material is a recording layer (12) on a substrate (11), said particles (13) having a size distribution σ expressed in nm such that 0.5≤σ≤3.

11. Optical device according to claim 8, 9 or 10, wherein said material is a recording layer (12) on a substrate (11), at least 80% of said particles (13) having radii less than the effective Bohr radius of said semiconductor material.

12. Optical device according to any one of claims 8 to 11, wherein said particles have an average size of not more than 10 nm.

13. Optical device according to any one of claims 8 to 12, wherein said semiconductor material is selected from germanium, silicon, tellurium and selenium.

14. Optical device according to any one of claims 8 to 13, wherein said matrix (14) is made of a material having a wider band gap than said semiconductor material.

15. Optical device according to any one of claims 8 to 14, wherein said matrix (14) is formed of silica or germanium oxide.

16. Optical device according to any one of claims 8 to 15, wherein the volume of said particles (13) in said matrix (14) is in the range 10 to 60% of the total volume of the matrix.

17. A method of recording information wherein electromagnetic energy is applied to said material of an optical device according to any one of claims 8 to 16 in dependence on the information to be recorded.

18. A method of reproducing information stored in said material of an optical device according to any one of claims 8 to 16 wherein the photon echo method is employed for reproducing the information.

19. A method according to any one of claims 1 to 6, wherein information is recorded in said material, said method including the steps of (a) applying a first energy to said material so as to bring said particles into the said amorphous state and (b) forming partial regions of the crystalline state exhibiting quantum size effects inside said particles by at least one application of a second energy which is smaller than the said first energy, said application of said second energy being controlled in dependence on the information to be recorded.

20. A method according to any one of claims 1 to 6, wherein information is recorded in said material, comprising the step of applying at least once to said material energy greater than the optical fundamental absorption energy of said particles, said application of said energy being controlled in dependence on the information to be stored.

21. A method according to any one of claims 1 to 6, wherein information recorded in said material is erased, the erasing method comprising applying energy to convert the said particles (13) into the amorphous state thereby erasing said recorded information.

22. A method according to any one of claims 1 to 6, wherein information recorded in said material is reproduced, the reproducing method comprising detecting at least one absorption wavelength appearing in a spectrum selected from the reflection, transmission and absorption spectra of said recording layer (12).

23. An apparatus for recording information having a recording medium comprising a substrate (11) and a recording layer (12) thereon, wherein said recording layer has a dielectric matrix (14) and fine particles (13) of a semiconductor material distributed in said matrix, said particles being in a state in which they contain crystalline regions of said semiconductor material of a size exhibiting quantum size effects, the apparatus further having means for controlledly irradiating said recording medium with light of intensity sufficient to cause size change of crystalline partial regions (32) of said semiconductor material in said particles (13), thereby recording information in said recording medium.

24. An apparatus according to claim 23, further having reproducing means for recorded information comprising means for detecting at least one optical absorption wavelength of said recording medium.

25. An apparatus according to claim 23 or claim 24, wherein said recording medium is included in a Fabry-Perot optical resonator (71, 72, 73).

26. An apparatus according to claim 23 or claim 24, wherein said recording medium is included in a ring resonator (82, 83, 84, 85).

**Patentansprüche**

1. Verfahren zum Ändern der optischen Eigenschaften eines Materials, bei dem kleine Halbleiterpartikel (13) in einer dielektrischen Matrix (14) verteilt sind, wobei die Partikel (13) in der Lage sind, kristalline und amorphe Teilbereiche zu umfassen, **gekennzeichnet** durch den Schritt des Anlegens von elektromagnetischer Energie an das Material derart, daß sich die Größe der kristallinen Teilbereiche (32) der Partikel ändert, wobei die kristallinen Teilbereiche eine solche Größe haben, daß sie Quantengrößeneffekte zeigen, um dadurch das optische Absorptionsspektrum des Materials zu ändern.

2. Verfahren nach Anspruch 1 für die Steuerung einer optischen Vorrichtung, die das Material enthält, wobei die Steuerung durch das Anlegen der Energie an das Material derart erfolgt, daß sich das Verhältnis der relativen Ausmaße der amorphen Bereiche (31) und der kristallinen Bereiche (32) in den Partikeln ändert.

3. Verfahren nach Anspruch 1 oder 2, wobei durch das Ändern der optischen Eigenschaften des Materials in Abhängigkeit von zu speichernden Daten eine Datenspeicherung erfolgt, wobei die Energie Lichtenergie ist, die das Ausmaß der kristallinen Teilbereiche (32) in den Halbleiterpartikeln verändert.

4. Verfahren nach einem der Ansprüche 1 bis 3, wobei die Größenverteilung der Halbleiterpartikel (13) eine Dispersion σ, in nm ausgedrückt, von $0,5 \leq \sigma \leq 3$ aufweist.

5. Verfahren nach einem der Ansprüche 1 bis 4, wobei die Halbleiterpartikel (13) eine mittlere Teilchengröße von nicht mehr als 10 nm aufweisen.

6. Verfahren nach einem der Ansprüche 1 bis 5, wobei wenigstens 80% der Halbleiterpartikel (13) einen Radius haben, der kleiner ist als der effektive Bohr-Radius des Materials der Halbleiterpartikel.

7. Verfahren zur Datenspeicherung, mit dem Schritt des Anlegens von elektromagnetischer Energie entsprechend der zu speichernden Daten an ein Aufzeichnungsmaterial, bei dem kleine Halbleiterpartikel in eine dielektrische Matrix eingebettet sind, wobei die Partikel in der Lage sind, kristalline und amorphe Teilbereiche zu umfassen, und wobei die kristallinen Teilbereiche eine solche Größe haben, daß sie Quantengrößeneffekte zeigen, wodurch die Partikel eine fundamentale optische Absorptionsenergie aufweisen, die durch die angelegte elektromagnetische Energie steuerbar ist, wobei das Anlegen der angelegten elektromagnetischen Energie so erfolgt, daß sich der Effekt einer Auswahl von optischen Absorptionsfrequenzspektren des Aufzeichnungsmaterials in Abhängigkeit von den zu speichernden Daten ergibt.

8. Optische Vorrichtung mit einem Material, dessen optische Eigenschaften variabel sind, wobei das Material kleine Partikel (13) eines Halbleitermaterials umfaßt, die in einer dielektrischen Matrix (14) verteilt sind, wobei die Partikel in einem Zustand sind, in dem sie in sich kristalline Teilbereiche (32) des Halbleitermaterials enthalten, wobei die kristallinen Bereiche (32) von einer solchen Größe sind, daß sie Quantengrößeneffekte zeigen, und wobei die Vorrichtung des weiteren eine Einrichtung zum Anlegen von elektromagnetischer Energie an die Partikel (13) derart umfaßt, daß sich die Größe der kristallinen Teilbereiche (32) ändert.

9. Optische Vorrichtung nach Anspruch 8, wobei die Einrichtung zum Anlegen von Energie an die Partikel dafür vorgesehen ist, Energie mit einer Intensität anzulegen, die ausreicht, das Verhältnis des relativen Ausmaßes von amorphen (31) und kristallinen Bereichen (32) der Partikel zu ändern und dadurch die optischen Eigenschaften des Körpers zu steuern.

10. Optische Vorrichtung nach Anspruch 8 oder 9, wobei das Material eine Aufzeichnungsschicht (12) auf einem Substrat (11) ist, wobei die Teilchen (13) eine Größenverteilung σ, in nm ausgedrückt, von $0{,}5 \leq \sigma \leq 3$ aufweisen.

11. Optische Vorrichtung nach Anspruch 8, 9 oder 10, wobei das Material eine Aufzeichnungsschicht (12) auf einem Substrat (11) ist, wobei wenigstens 80% der Partikel (13) einen Radius haben, der kleiner ist als der effektive Bohr-Radius des Halbleitermaterials.

12. Optische Vorrichtung nach einem der Ansprüche 8 bis 11, wobei die Partikel eine mittlere Größe von nicht mehr als 10 nm haben.

13. Optische Vorrichtung nach einem der Ansprüche 8 bis 12, wobei das Halbleitermaterial aus Germanium, Silizium, Tellur und Selen ausgewählt ist.

14. Optische Vorrichtung nach einem der Ansprüche 8 bis 13, wobei die Matrix (14) aus einem Material ist, dessen Bandabstand größer ist als der des Halbleitermaterials.

15. Optische Vorrichtung nach einem der Ansprüche 8 bis 14, wobei die Matrix (14) aus Siliziumoxid oder Germaniumoxid ist.

16. Optische Vorrichtung nach einem der Ansprüche 8 bis 15, wobei das Volumen der Partikel (13) in der Matrix (14) im Bereich von 10 bis 60% des Gesamtvolumens der Matrix liegt.

17. Verfahren zum Aufzeichnen von Informationen, bei dem elektromagnetische Energie in Abhängigkeit von der aufzuzeichnenden Information an das Material einer optischen Vorrichtung nach einem der Ansprüche 8 bis 16 angelegt wird.

18. Verfahren zur Wiedergabe von Informationen, die in dem Material einer optischen Vorrichtung nach einem der Ansprüche 8 bis 16 gespeichert sind, wobei zur Wiedergabe der Informationen das Photonenechoverfahren angewendet wird.

19. Verfahren nach einem der Ansprüche 1 bis 6, wobei im Material Informationen aufgezeichnet werden, wobei das Verfahren die Schritte (a) des Anlegens einer ersten Energie an das Material derart, daß die Partikel in den amorphen Zustand übergehen, und (b) das Ausbilden von Teilbereichen des kristallinen Zustands, die Quantengrößeneffekte zeigen, in den Partikeln durch wenigstens das Anlegen einer zweiten Energie umfaßt, die kleiner ist als die erste Energie, wobei das Anlegen der zweiten Energie in Abhängigkeit von der aufzuzeichnenden Information gesteuert wird.

20. Verfahren nach einem der Ansprüche 1 bis 6, wobei im Material Informationen aufgezeichnet werden, mit dem Schritt des wenigstens einmaligen Anlegens einer Energie an das Material, die größer ist als die fundamentale optische Absorptionsenergie der Partikel, wobei das Anlegen der Energie in Abhängigkeit von der zu speichernden Information gesteuert wird.

21. Verfahren nach einem der Ansprüche 1 bis 6, wobei im Material aufgezeichnete Informationen gelöscht werden, wobei das Löschverfahren das Anlegen von Energie zum Umwandeln der Partikel (13) in den amorphen Zustand umfaßt, wodurch die aufgezeichnete Information gelöscht wird.

22. Verfahren nach einem der Ansprüche 1 bis 6, wobei im Material aufgezeichnete Informationen wiedergegeben werden, wobei das Wiedergabeverfahren das Erfassen wenigstens einer Absorptionswellenlänge umfaßt, die in einem Spektrum erscheint, das aus den Reflektions-, Transmissions- und Absorptionsspektren der Aufzeichnungsschicht (12) ausgewählt wird.

23. Vorrichtung zum Aufzeichnen von Informationen mit einem Aufzeichnungsmedium mit einem Substrat (11) und einer Aufzeichnungsschicht (12) darauf, wobei die Aufzeichnungsschicht eine dielektrische Matrix (14) und kleine Partikel (13) aus einem Halbleitermaterial umfaßt, die in der Matrix verteilt sind, wobei die Partikel in einem Zustand sind, in dem sie kristalline Bereiche des Halbleitermaterials mit einer solchen Größe enthalten, daß sie Quantengrößeneffekte zeigen, und wobei die Vorrichtung des weiteren eine Einrichtung zum gesteuerten Bestrahlen des Aufzeichnungsmediums mit Licht einer Intensität umfaßt, die ausreicht, um eine Größenänderung der kristallinen Teilbereiche (32) des Halbleitermaterials in den Partikeln (13) zu bewirken, um dadurch Informationen im Aufzeichnungsmedium aufzuzeichnen.

24. Vorrichtung nach Anspruch 23, mit einer Wiedergabeeinrichtung für aufzeichnete Informationen mit einer Einrichtung zum Erfassen wenigstens einer optischen Absorptionswellenlänge des Aufzeichnungsmediums.

**25.** Vorrichtung nach Anspruch 23 oder 24, wobei das Aufzeichnungsmedium Teil eines optischen Fabry-Perot-Resonators (71, 72, 73) ist.

**26.** Vorrichtung nach Anspruch 23 oder 24, wobei das Aufzeichnungsmedium Teil eines Ringresonators (82, 83, 84, 85) ist.

**Revendications**

**1.** Procédé pour faire varier les propriétés optiques d'un matériau comportant de fines particules semi-conductrices (13) réparties dans une matrice diélectrique (14), lesdites particules (13) étant susceptibles de comprendre des régions partielles cristallines et amorphes, le procédé étant caractérisé par l'étape d'application audit matériau d'une énergie électromagnétique de façon à changer la taille desdites régions partielles cristallines (32) desdites particules, ces régions partielles cristallines ayant une taille présentant des effets de taille quantique, de façon à faire changer par conséquent le spectre d'absorption optique du matériau.

**2.** Procédé selon la revendication 1 pour assurer la commande d'un dispositif optique comprenant ledit matériau, dans lequel ladite commande est effectuée en appliquant ladite énergie audit matériau de façon à faire varier le rapport des quantités relatives des régions amorphes (31) et des régions cristallines (32) dans lesdites particules.

**3.** Procédé selon la revendication 1 ou la revendication 2, dans lequel la mémorisation de données est effectuée en faisant varier les propriétés optiques dudit matériau en fonction des données mémorisées, dans lequel ladite énergie est de l'énergie lumineuse qui change la quantité desdites régions partielles cristallines (32) dans lesdites particules semi-conductrices.

**4.** Procédé selon l'une quelconque des revendications 1 à 3, dans lequel la distribution de taille desdites particules semi-conductrices (13) a une dispersion σ exprimée en nm qui est telle que $0,5 \leq \sigma \leq 3$.

**5.** Procédé selon l'une quelconque des revendications 1 à 4, dans lequel lesdites particules semi-conductrices (13) ont une taille de particule moyenne qui n'est pas supérieure à 10 nm.

**6.** Procédé selon l'une quelconque des revendications 1 à 5, dans lequel au moins 80% desdites particules semi-conductrices (13) ont des rayons qui sont inférieurs au rayon de Bohr efficace du matériau desdites particules semi-conductrices.

**7.** Procédé de mémorisation de données comprenant l'étape d'application d'une énergie électromagnétique représentative des données devant être mémorisées à un matériau d'enregistrement qui comporte de fines particules semi-conductrices noyées dans une matrice diélectrique, lesdites particules étant susceptibles de comprendre des régions partielles cristallines et amorphes, ces régions cristallines ayant une taille présentant des effets de taille quantique, grâce à quoi lesdites particules ont une énergie d'absorption fondamentale optique qui peut être contrôlée au moyen de ladite énergie électromagnétique appliquée, l'application de ladite énergie électromagnétique appliquée étant choisie de façon à avoir pour effet de sélectionner des spectres de fréquences d'absorption optique du matériau d'enregistrement en fonction des données devant être mémorisées.

**8.** Dispositif optique comportant un matériau dont les propriétés optiques sont variables, ledit matériau comportant de fines particules (13) en matériau semi-conducteur réparties dans une matrice diélectrique (14), lesdites particules étant en état de contenir en elles des régions partielles cristallines (32) dudit matériau semi-conducteur, lesdites régions cristallines (32) ayant une taille présentant des effets de taille quantique, et ledit dispositif comprenant de plus des moyens pour appliquer une énergie électromagnétique auxdites particules (13), de façon à faire varier la taille desdites régions partielles cristallines (32).

**9.** Dispositif optique selon la revendication 8, dans lequel lesdits moyens pour appliquer de l'énergie auxdites particules sont adaptés pour appliquer une énergie ayant une intensité suffisante pour faire varier le rapport des quantités relatives des régions amorphes (31) et cristallines (32) desdites particules, de façon à contrôler par conséquent les propriétés optiques du corps.

**10.** Dispositif optique selon la revendication 8 ou 9, dans lequel ledit matériau est une couche d'enregistrement (12) sur un substrat (11), lesdites particules (13) ayant une distribution de taille σ exprimée en nm qui est telle que $0,5 \leq \sigma \leq 3$.

**11.** Dispositif optique selon la revendication 8, 9 ou 10, dans lequel ledit matériau est une couche d'enregistrement (12) sur un substrat (11), au moins 80% desdites particules (13) ayant des rayons inférieurs au rayon de Bohr efficace dudit matériau semi-conducteur.

**12.** Dispositif optique selon l'une quelconque des revendications 8 à 11, dans lequel lesdites particules ont une taille moyenne qui n'est pas supérieure à 10 nm.

13. Dispositif optique selon l'une quelconque des revendications 8 à 12, dans lequel ledit matériau semi-conducteur est choisi parmi le germanium, le silicium, le tellure et le sélénium.

14. Dispositif optique selon l'une quelconque des revendications 8 à 13, dans lequel ladite matrice (14) est constituée en un matériau ayant une largeur de bande interdite supérieure à celle dudit matériau semi-conducteur.

15. Dispositif optique selon l'une quelconque des revendications 8 à 14, dans lequel ladite matrice (14) est formée de silice ou d'oxyde de germanium.

16. Dispositif optique selon l'une quelconque des revendications 8 à 15, dans lequel le volume desdites particules (13) dans ladite matrice (14) est situé dans la plage comprise entre 10 et 60% du volume total de la matrice.

17. Procédé d'enregistrement d'information dans lequel de l'énergie électromagnétique est appliquée audit matériau d'un dispositif optique selon l'une quelconque des revendications 8 à 16 en fonction de l'information devant être enregistrée.

18. Procédé de reproduction d'information mémorisée dans ledit matériau d'un dispositif optique selon l'une quelconque des revendications 8 à 16, dans lequel le procédé d'écho de photon est employé pour reproduire l'information.

19. Procédé selon l'une quelconque des revendications 1 à 6, dans lequel l'information est enregistrée dans ledit matériau, ledit procédé comprenant les étapes consistant à (a) appliquer une première énergie audit matériau de façon à mettre lesdites particules dans ledit état amorphe, et à (b) former des régions partielles de l'état cristallin présentant des effets de taille quantique à l'intérieur desdites particules par au moins une application d'une deuxième énergie qui est inférieure à ladite première énergie, ladite application de ladite deuxième énergie étant contrôlée en fonction de l'information devant être enregistrée.

20. Procédé selon l'une quelconque des revendications 1 à 6, dans lequel une information est enregistrée dans ledit matériau, comprenant l'étape consistant à appliquer au moins une fois audit matériau une énergie supérieure à l'énergie d'absorption fondamentale optique desdites particules, ladite application de ladite énergie étant contrôlée en fonction de l'information devant être mémorisée.

21. Procédé selon l'une quelconque des revendications 1 à 6, dans lequel l'information enregistrée dans ledit matériau est effacée, le procédé d'effacement comprenant l'application d'énergie pour convertir lesdites particules (13) dans l'état amorphe de façon à effacer par conséquent ladite information enregistrée.

22. Procédé selon l'une quelconque des revendications 1 à 6, dans lequel l'information enregistrée dans ledit matériau est reproduite, le procédé de reproduction comprenant la détection d'au moins une longueur d'onde d'absorption apparaissant dans un spectre sélectionné à partir des spectres de réflexion, d'émission et d'absorption de ladite couche d'enregistrement (12).

23. Dispositif pour enregistrer une information comportant un milieu d'enregistrement comprenant un substrat (11) et une couche d'enregistrement (12) sur celui-ci, dans lequel ladite couche d'enregistrement comporte une matrice diélectrique (14) et de fines particules (13) d'un matériau semi-conducteur réparties dans ladite matrice, lesdites particules étant dans un état dans lequel elles contiennent des régions cristallines dudit matériau semi-conducteur, ayant une taille présentant des effets de taille quantique, le dispositif comportant de plus des moyens pour rayonner de façon contrôlée sur ledit milieu d'enregistrement une lumière ayant une intensité suffisante pour provoquer un changement de taille des régions partielles cristallines (32) dudit matériau semi-conducteur dans lesdites particules (13), de façon à enregistrer par conséquent une information dans ledit milieu d'enregistrement.

24. Dispositif selon la revendication 23, comportant de plus des moyens de reproduction pour enregistrer une information, comprenant des moyens pour détecter au moins une longueur d'onde d'absorption optique dudit milieu d'enregistrement.

25. Dispositif selon la revendication 23 ou la revendication 24, dans lequel ledit milieu d'enregistrement est inclus dans un résonateur optique de Fabry-Perot (71, 72, 73).

26. Dispositif selon la revendication 23 ou la revendication 24, dans lequel ledit milieu d'enregistrement est inclus dans un résonateur en anneau (82, 83, 84, 85).

# Fig .1A

# Fig . 1B

# Fig. 2A

Transmittance

Wavelength

A

# Fig. 2B

00110001100111111001100110000

Fig. 3A

Fig. 3B

Fig. 3C

Fig. 4A

Fig. 4B

Wavelength

Fig. 4C

Fig. 4D

Wavelength

Fig. 5A

Fig. 5B

0001010100100110 01000110

T

Wavelength

Fig. 5C

Fig. 5D

0001001000011001 11001010

T

Wavelength

# Fig. 6

Emitted light intensity vs. Wavelength (nm)

580

620

# Fig. 7

72  71  72

73

75

74

76

77

# Fig .8

# Fig .9